# EUROPÄISCHE PATENTSCHRIFT

(11) **EP 1 792 242 B1**
(45) Veröffentlichungstag und Bekanntmachung des Hinweises auf die Patenterteilung: **02.03.2011**
(21) Anmeldenummer: 05786411.8
(22) Anmeldetag: 13.09.2005
(51) Int. Cl.: G05B 23/02, G05B 9/02, F04D 27/00

(54) **VERFAHREN UND VORRICHTUNG ZUM ERMITTELN EINES FEHLERZUSTANDES EINES ROTIERENDEN VERDICHTERS**
METHOD AND DEVICE FOR DETERMINING AN ERROR STATE IN A ROTATING COMPRESSOR
PROCEDE ET DISPOSITIF POUR DETERMINER UN ETAT DEFECTUEUX DANS UN COMPRESSEUR ROTATIF

(30) Priorität: 13.09.2004 DE 102004044185
(43) Veröffentlichungstag der Anmeldung: 06.06.2007
(73) Patentinhaber: Avicomp Controls GmbH, 04155 Leipzig (DE)
(72) Erfinder: SCHÖNE, Wolfram, 04808 Falkenhein OT Meltewitz (DE); GOTTSMANN, Andre, 04838 Zschepplin (DE); EICHHORN, Ronald, 04249 Leipzig (DE)
(74) Vertreter: Schaumburg, Thoenes, Thurn, Landskron, Eckert
(86) Internationale Anmeldenummer: PCT/EP2005/009830
(87) Internationale Veröffentlichungsnummer: WO 2006/029816

(56) Entgegenhaltungen:
- EP-A- 0 670 425
- US-A1- 2002 184 951
- US-A1- 2004 037 693
- US-A1- 2004 159 103

## Beschreibung

Die Erfindung betrifft ein Verfahren zum Ermitteln eines Fehlerzustandes eines rotierenden Verdichters, insbesondere eines Turboverdichters. Mit Hilfe einer Messeinrichtung wird ein Betriebsparameter des Verdichters wiederholt erfasst und der Gradientenwert des Betriebsparameters wird wiederholt bestimmt.

Verdichter sind allgemein Arbeitsmaschinen zum Verdichten von Gasen und Dämpfen. Verdichter mit einem Verhältnis von Enddruck zu Ansaugdruck von über 3 werden auch als Kompressoren, bis etwa 3 als Gebläse und bis 1,1 als Ventilatoren bezeichnet. Solche Verdichter werden vielfältig zur Druckluftversorgung, zum Fördern von Gasen in der chemischen Industrie und in Klärwerken eingesetzt. Kreisel- und Turboverdichter sind Strömungsmaschinen, die abhängig von der Richtung, aus der dem Verdichterlaufrad das zu fördernde Medium zugeführt wird, als Radialverdichter oder Axialverdichter bezeichnet werden. Solche Axial- und Radialverdichter mit hohen Drehzahlen eines Laufrades des Verdichters von bis zu 46000 Umdrehungen pro Minute werden üblicherweise als Turboverdichter bezeichnet. Verdichter können so dimensioniert und geregelt werden, dass ein konstanter Massenstrom, ein konstanter Ausgangsdruck (Enddruck) und/oder ein konstanter Eingangsdruck (Saugdruck) erzeugt wird.

Abhängig vom Verhältnis von ausgansseitigem Enddruck zu eingangsseitigem Saugdruck und der physikalisch möglichen Leistung des Verdichters kann ein instabiler Betriebszustand auftreten, bei dem der Massenstrom durch den Verdichter abreißt und ein druckseitig verdichtetes Gas zurück in den Verdichter gedrückt wird. Ein solcher Betriebszustand wird auch als Pumpen des Verdichters bezeichnet, da sich dieser Zustand kontinuierlich wiederholt, falls sich die Betriebsbedingungen nicht ändern. Die Frequenz der Wiederholungen ist insbesondere von der druckseitig entnommenen Gasmenge und dem wirksamen druckseitigen Volumen abhängig, in das das Gas gefördert wird. Solche Betriebszustände entstehen insbesondere bei Druckschwankungen beim Zu- und Abschalten von Verbrauchern bzw. bei Änderungen der druckseitig abgenommenen Menge. Dieses Pumpen führt jedoch zumindest über einen längeren Zeitraum zu erhöhtem Verschleiß und zur Beschädigung einzelner Bauteile des Verdichters sowie gegebenenfalls von Bauwerkteilen, mit denen der Verdichter verbunden ist.

Die Pumpgrenze des Verdichters ist vom Eingangsdruck, vom Ausgangsdruck, dem Verhältnis von Eingangs- und Ausgangsdruck sowie vom Massenstrom durch den Verdichter sowie von der Antriebsleistung des Verdichters abhängig. Die Regelung des Verdichters kann z.B. über die Antriebseinheit, insbesondere mit Hilfe einer Drehzahlregelung, durchgeführt werden, wobei als Antriebseinheit insbesondere Asynchronmotoren, Synchronmotoren sowie Gas- oder Dampfturbinen eingesetzt werden. Zum Vermeiden des Pumpens muss ein Mindestmassenstrom durch den Verdichter gewährleistet sein. Zusätzlich oder alternativ zu einer Drehzahlregelung können so genannte Ausblaseventile oder Ausblaseklappen eingesetzt werden, die das druckseitig verdichtete Gas aus einer Druckleitung entnehmen und freisetzen. Alternativ oder zusätzlich kann eine Rückführung von zumindest einem Teil des verdichteten Gases mit Hilfe eines Regelventils oder einer Regelklappe über eine so genannte Bypassleitung erfolgen, wodurch das druckseitig entnommene Gas dem Verdichter wieder eingangsseitig zugeführt wird. Ferner kann auch ein zu geringer Eingangsdruck zu einer Überschreitung der Pumpgrenze und somit zu einem instabilen Betriebszustand führen.

Ein instabiler Betriebszustand des Verdichters muss somit erkannt und vermieden werden, um die bereits erwähnten Beschädigungen zu verhindern. Es ist bekannt, eine Pumpgrenzregelung mit Hilfe einer für einen konkreten Verdichter ermittelten oder berechneten Pumpgrenze durchzuführen, durch die verhindert wird, dass der Arbeitspunkt des Verdichters die Pumpgrenze überschreitet und gleichzeitig einen Arbeitspunkt in der Nähe der Pumpgrenze einstellt, wodurch einen möglichst hohen Wirkungsgrad des Verdichters erzielt wird. Durch eine solche Pumpgrenzregelung wird dann ein instabiler Betriebszustand vermieden.

Jedoch muss trotz Pumpgrenzregelung sichergestellt werden, dass das Überschreiten der Pumpgrenze, insbesondere infolge von starken Änderungen des Massenstroms und/oder des Ein- bzw. Ausgangsdrucks des Verdichters, und das damit verbundene Pumpen des Verdichters erfasst wird, um geeignete Maßnahmen ergreifen zu können, durch die eine Schädigung des Verdichters und/oder des Bauwerks vermieden wird.

Ferner ist es notwendig, bei einer falsch berechneten oder falsch bestimmten Pumpgrenze des Verdichters die instabilen Betriebszustände zu erfassen, auch wenn die voreingestellte Pumpgrenze nicht überschritten worden ist. Das Erfassen des instabilen Betriebszustandes und das Ergreifen geeigneter Maßnahmen zum Beseitigen des instabilen Betriebszustandes wird auch als Pumpschutz bezeichnet.

Übliche Frequenzen mehrerer aufeinander folgender Pumpstöße, d.h. zwischen zwei Betriebszuständen, bei denen der Massenstrom durch den Verdichter wiederholt abreißt, betragen bei üblichen Verdichtern im Bereich von 0,3 Hz bis 3 Hz. Dadurch ergibt sich eine periodische Förderung des Gases ähnlich einem Kolbenverdichter. Das Abreißen des Massestroms und das wiederholte Aufbauen des Massestroms ist mit Geräuschen und starken Vibrationen verbunden. Bei einigen Verdichtern kann dann ein Geräusch ähnlich einer Dampflok wahrgenommen werden.

Aus dem Dokument DE 100 07 669 A1 ist ein Verfahren zum Regeln eines Verdichters im Ansaugtrakt einer Brennkraftmaschine bekannt. Aus dem Dokument DE 101 12 138 A1 ist eine Vorrichtung zum Überwachen eines Sensorsignals zur Unterscheidung von Sensorfehlern und Signalwerten bekannt. Aus dem Dokument DE 36 05 958 A1 ist ein Verfahren zum Erfassen und Beheben von Ablöseschwingungen an Verdichterschaufeln bekannt. Aus dem Dokument DE 101 54 783 A1 ist ein Verfahren zur Überwachung des Luftvolumenstromes bei einem Gebläse bekannt. Aus dem Dokument DE 693 25 375 T2 ist ein Verfahren und eine Vorrichtung zur Überwachung und Steuerung eines Verdichters bekannt.

Aus dem Dokument US 2004/0037693 A1 ist eine Vorrichtung zum Detektieren eines Strömungsabrisses in einem Kompressor bekannt, die einen innerhalb der Gasströmung angeordneten Drucksensor umfasst, mit dessen Hilfe Druckphänomene des Kompressors erfasst werden. Der Sensor ist insbesondere stromabwärts des Flügelrades des Kompressors angeordnet.

Aus dem Dokument EP 0 670 425 A1 ist es bekannt, die Drehzahl und das Drehmoment der Antriebswelle eines Gasgenerators zu erfassen, um einen Pumpzustand zu detektieren. Die zur Ermittlung der Drehzahl und des Drehmomentes erforderlichen Sensoren sind innerhalb des Gasgenerators angeordnet und mechanisch fest mit diesem verbunden.

Aus dem Dokument US 2002/0184951 A1 ist eine Vorrichtung zur Überwachung eines Kompressors bekannt. Die Vorrichtung umfasst eine Vielzahl von Drucksensoren, die innerhalb der gasdurchströmten Leitung des Kompressors oder am Kompressorgehäuse angeordnet sind und mit deren Hilfe der dynamische Druck im Kompressor erfasst wird.

Aus dem Dokument US 3,872,292 ist ein System zur Erzeugung eines Warnsignals bekannt, das das Warnsignal erzeugt, wenn ein Strömungsabriss eines Kompressors durch ein Sensorsystem ermittelt wird. Das Sensorsystem umfasst zwei Mikrofone. Aufgabe der Erfindung ist es, ein Verfahren und eine Vorrichtung zum Ermitteln eines Fehlerzustandes eines rotierenden Verdichters anzugeben, bei denen der Fehlerzustand des Verdichters auf einfache Art und Weise sicher erkannt wird.

Diese Aufgabe wird durch ein Verfahren mit den Merkmalen des Patentanspruchs 1 gelöst. Vorteilhafte Weiterbildungen der Erfindung sind in den abhängigen Patentansprüchen angegeben.

Durch das Verfahren mit den Merkmalen des Patentanspruchs 1 wird erreicht, dass der Fehlerzustand des Verdichters zuverlässig erkannt wird und Fehlbewertungen des erfassten Betriebsparameters insbesondere durch das Erfassen eines positiven Gradientenwertes und eines negativen Gradientenwertes zuverlässig vermieden werden. Die mit einer Fehlinterpretation der Änderung des Betriebsparameters verbundenen Fehlreaktionen, die zu einer erheblichen Störung eines Produktionsablaufs führen können, in den der Verdichter eingebunden ist, werden somit wirkungsvoll verhindert.

Ein zweiter Aspekt der Erfindung betrifft eine Vorrichtung zum Ermitteln eines Fehlerzustandes eines rotierenden Verdichters, insbesondere eines Turboverdichters. Die Vorrichtung hat eine Messeinrichtung, die einen Betriebsparameter des Verdichters wiederholt erfasst, und eine Steuereinheit, die den Gradientenwert des Betriebsparameters wiederholt bestimmt. Die Steuereinheit überwacht das Unterschreiten eines negativen Gradientengrenzwertes und das Überschreiten eines positiven Gradientengrenzwertes. Insbesondere durch das Überwachen des Unterschreitens eines negativen Gradientengrenzwertes und das Überwachen des Überschreitens eines positiven Gradientengrenzwertes wird wirkungsvoll verhindert, dass Änderungen, die aufgrund von sich ändernden Betriebsparametern erfasst werden, als fehlerhafte Betriebszustände interpretiert werden. Somit werden Fehlinterpretationen und Fehlreaktionen verhindert.

Ein dritter Aspekt der Erfindung betrifft ein Verfahren zum Ermitteln eines Fehlerzustandes eines rotierenden Verdichters, insbesondere eines Turboverdichters. Mit Hilfe eines Schallaufnehmers wird der vom Verdichter abgegebene Schall wiederholt erfasst. Der Grenzwert des erfassten Schalls wird bestimmt und der bestimmte Gradientenwert wird mit einem Gradientengrenzwert verglichen.

Durch dieses Verfahren wird auf einfache Art und Weise ein Fehlerzustand des Verdichters, insbesondere ein so genanntes Pumpen des Verdichters, erfasst.

Ein vierter Aspekt der Erfindung betrifft eine Vorrichtung zum Ermitteln eines Fehlerzustandes eines rotierenden Verdichters, insbesondere eines Turboverdichters. Die Vorrichtung hat einen Schallaufnehmer, der den vom Verdichter abgegebenen Schall wiederholt erfasst, sowie mit einer Steuereinheit, die den Gradienten des erfassten Schalls bestimmt und die den bestimmten Gradienten mit einem Gradientengrenzwert vergleicht.

Durch diese Vorrichtung wird der Fehlerzustand, insbesondere ein Pumpen, des Verdichters auf einfache Art und Weise erfasst. Eine solche erfindungsgemäße Vorrichtung ist kostengünstig herzustellen und hat einen einfachen Aufbau.

Ein fünfter Aspekt der Erfindung betrifft ein Verfahren zum Ermitteln eines Fehlerzustandes eines rotierenden Verdichters, insbesondere eines Turboverdichters, bei dem mit Hilfe eines Schallaufnehmers der vom Verdichter abgegebene Schall wiederholt erfasst wird. Die Amplitude in einem vorbestimmten Frequenzband des erfassten Schalls wird bestimmt. Ferner wird die bestimmte Amplitude mit einem Amplitudengrenzwert verglichen.

Durch dieses erfindungsgemäße Verfahren wird erreicht, dass ein Fehlerzustand des Verdichters auf einfache Art und Weise erfasst wird, wobei eine Fehlinterpretation von sich ändernden Betriebszuständen auf einfache Art und Weise vermieden wird.

Ein sechster Aspekt der Erfindung betrifft eine Vorrichtung zum Ermitteln eines Fehlerzustandes eines rotierenden Verdichters, insbesondere eines Turboverdichters. Die Vorrichtung hat einen Schallaufnehmer, der den vom Verdichter abgegebenen Schall wiederholt erfasst. Ferner hat die Vorrichtung eine Steuereinheit, die die Amplitude des erfassten Schalls in einem voreingestellten Frequenzband bestimmt und die die bestimmte Amplitude mit einem Amplitudengrenzwert vergleicht.

Mit Hilfe dieser erfindungsgemäßen Vorrichtung wird erreicht, dass ein Fehlerzustand, insbesondere ein Pumpen, des Verdichters sicher und zuverlässig erfasst wird. Ferner ist die erfindungsgemäße Vorrichtung einfach und kostengünstig aufgebaut.

Zum besseren Verständnis der vorliegenden Erfindung wird im Folgenden auf die in den Zeichnungen dargestellten bevorzugten Ausführungsbeispiele Bezug genommen, die an Hand spezifischer Terminologie beschrieben sind. Es sei jedoch darauf hingewiesen, dass der Schutzumfang der Erfindung dadurch nicht eingeschränkt werden soll, da derartige Veränderungen und weitere Modifizierungen an den gezeigten Vorrichtungen und den Verfahren sowie derartige weitere Anwendungen der Erfindung, wie sie darin aufgezeigt sind, als übliches derzeitiges oder künftiges Fachwissen eines zuständigen Fachmanns angesehen werden. Die Figuren zeigen Ausführungsbeispiele der Erfindung, nämlich:
- Fig.1: einen Funktionsplan eines zweistufigen Turbover- dichters;
- Fig. 2: ein Diagramm mit einer Kennlinie eines drehzahlge- regelten Verdichters nach Fig. 1;
- Fig. 3: ein Diagramm mit einer Kennlinie eines Verdichters nach Fig. 1 mit Festdrehzahl;
- Fig. 4: ein Diagramm mit den zeitlichen Verläufen von er- mittelten Betriebsgrößen des Verdichters nach Fig. 1;
- Fig. 5: einen Bildschirmausdruck eines Schallpegelerfas- sungsgerätes bei einer Aufnahme des Schalldruckpe- gels des Verdichters nach Fig. 1;
- Fig. 6: ein Diagramm mit drei nacheinander aufgenommenen Spektren des Schalldruckpegels nach Fig. 5;
- Fig. 7: ein Diagramm mit den zeitlichen Verläufen von Be- triebsgrößen des Verdichters;
- Fig. 8: einen Bildschirmausdruck mit dem Verlauf des Schalldruckpegels des Verdichters nach Fig. 1 beim zeitlichen Verlauf der Betriebsgrößen nach Fig. 7;
- Fig. 9: mit den Spektren des Schalldruckpegels nach Fig. 8 zu drei verschiedenen Zeitpunkten;
- Fig. 10: einen Bildschirmausdruck mit dem Verlauf des abge- gebenen Schalls eines zweiten Turboverdichters;
- Fig. 11: ein Diagramm mit der spektralen Verteilung des vom Verdichter abgegebenen Schalls nach Fig. 10 zu zwei unterschiedlichen Zeitpunkten;
- Fig. 12: ein Blockschaltbild eines Bandpassfilters mit Mit- telwertbildung zum Auswerten des Schalldruckpegels eines Verdichters;
- Fig. 13: ein Blockschaltbild zum akustischen Erfassen eines Fehlerzustandes eines Verdichters gemäß einer ers- ten Ausführungsform der Erfindung;
- Fig. 14: den schematischen Aufbau einer Auswerteeinheit zum Auswerten des Geräuschpegels des Verdichters gemäß der ersten Ausführungsform der Erfindung; und
- Fig. 15: einen Ablaufplan zum Erfassen eines Fehlerzustandes eines Verdichters gemäß einer zweiten Ausführungs- form der Erfindung.

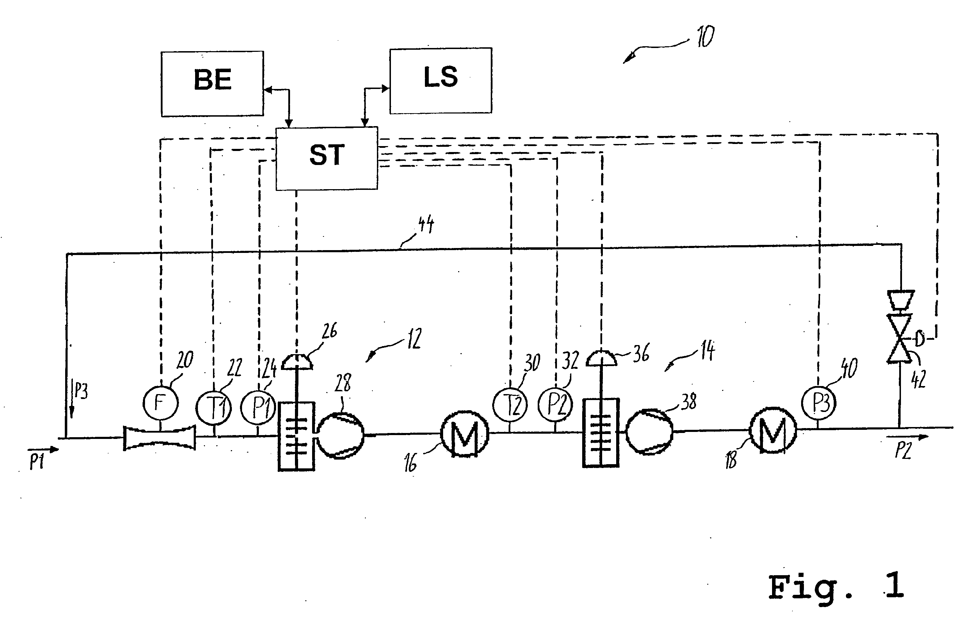

In Fig. 1 ist ein Funktionsplan eines zweistufigen Turboverdichters 10 dargestellt. Ein solcher Funktionsplan wird auch als P&I-Diagramm bezeichnet. In Richtung des Pfeils P1 wird dem Verdichter 10 ein zu verdichtendes Gas, beispielsweise Wasserstoff zugeführt. Der Verdichter 10 ist ein zweistufiger Turboverdichter mit einer mit 12 bezeichneten ersten Verdichterstufe und mit einer mit 14 bezeichneten zweiten Verdichterstufe. Nach jeder der Verdichterstufen 12, 14 ist jeweils eine Kühleinheit 16, 18 vorgesehen, die das beim Verdichten des Gases in der Verdichterstufe 12, 14 erwärmte Gas wieder abkühlt. Die Menge des der ersten und der zweiten Verdichterstufe 12, 14 zugeführten Gases wird mit Hilfe der Mengenmesseinrichtung 20 ermittelt. Ferner wird die Temperatur T1 des der ersten Verdichterstufe 12 zugeführten Gases mit Hilfe der Temperaturmesseinrichtung 22 und der Druck P1 des zugeführten Gases mit der Druckmesseinrichtung 24 ermittelt. Die mit Hilfe der Temperaturmesseinrichtung 22 ermittelte Temperatur wird auch als Saugtemperatur T1 und der mit Hilfe der Druckmesseinrichtung 24 ermittelte Druck auch als Saugdruck P1 bezeichnet.

Die erste Verdichterstufe 12 hat ein einstellbares Vorleitgitter 26, durch das der Anströmwinkel des Gases auf ein Verdichterlaufrad 28 eingestellt und somit verändert werden kann. Das Vorleitgitter 26 hat beispielsweise einen elektropneumatischen Stellantrieb, mit dessen Hilfe die Position des Vorleitgitters 26 einstellbar ist. Mit Hilfe einer Temperaturmesseinrichtung 30 und einer Druckmesseinrichtung 24 wird die Gastemperatur und der Gasdruck vor der zweiten Verdichterstufe 14 ermittelt. Alternativ oder zusätzlich kann die Temperatur und der Druck des mit Hilfe der ersten Verdichterstufe 12 verdichteten Gases vor der Kühleinheit 16 ermittelt und ausgewertet werden. In gleicher Weise, wie die erste Verdichterstufe 12, hat die zweite Verdichterstufe 14 ein einstellbares Vorleitgitter 34 und ein Verdichterlaufrad 36. Mit Hilfe der Kühleinheit 18 wird das von der zweiten Verdichterstufe 14 verdichtete Gas gekühlt. Der Enddruck P3 des Verdichters 10 nach der Kühleinheit 18 wird mit Hilfe einer Druckmesseinrichtung 40 ermittelt.

Das vom Verdichter 10 verdichtete Gas wird in Richtung des Pfeils P2 zu einer nachfolgenden Verarbeitungsstufe, insbesondere zu einer Verflüssigungseinheit oder zu einem Reaktor, geführt. Das vom Verdichter 10 verdichtete Gas wird ferner einem Bypassventil 42 zugeführt, dass über eine so genannte Bypassleitung 44 die Druckseite mit der Saugseite des Verdichters 10 verbindet. Somit kann über das Bypassventil 42 und die Bypassleitung 44 zumindest ein Teil des vom Verdichter 10 verdichteten Gases wieder der Saugseite zugeführt werden. Dadurch kann sichergestellt werden, dass bei einer geringen Gasmengenabnahme der nach dem Verdichter 10 vorgesehenen Verarbeitungsstufen dem Verdichter 10 wieder zumindest so viel Gasmenge zugeführt wird, dass die Mindestfördermenge des Verdichters 10 erreicht oder überschritten ist.

Fördert der Verdichter 10 eine geringere Gasmenge F als die Mindestgasmenge, so führt dies zu einem instabilen Betriebszustand des Verdichters 10. Radialverdichter, insbesondere Turbokompressoren, haben einen relativ eingeschränkten Regelbereich, so dass die Mindestfördermenge bei üblichen Turbokompressoren bei mindestens 50 % der maximalen Fördermenge liegt. Wird eine geringere Menge als die Mindestfördermenge durch den Verdichter 10 gefördert, so reißt der Massenstrom durch den Verdichter 10 ab, wodurch der Verdichter 10 schlagartig entlastet wird und der Enddruck P3 des Verdichters sehr steil abfällt, d.h. einbricht. Anschließend erfolgt ein Neuaufbau der Strömung und das Gas wird wieder derart verdichtet, dass ein der Enddruck P3 wieder ansteigt. Dieser Druckanstieg erfolgt bis zum erneuten Abriss des Massenstroms. Dieser Vorgang wiederholt sich abhängig von der Bauart, der Auslegung und dem wirksamen Volumen der Nachverarbeitungseinheit mit einer Frequenz von üblicherweise 0,3 bis 3 Hz und wird auch als Pumpen bezeichnet. Beim Pumpen erfolgt eine periodische Förderung des Gases ähnlich einem Kolbenverdichter.

Das beim Abreißen des Massenstroms druckseitig in den Verdichter strömende Gas und der erneute Aufbau der Strömung führt zu erheblichen Belastungen der Schaufeln der Verdichterlaufräder 38, 28, der Lager der Verdichters sowie des Bauwerks, mit dem Verdichter verbunden ist, die zur Zerstörung von einzelnen Baugruppen des Verdichters und/oder des Bauwerks führen können. Ferner ist das Pumpen mit starken Vibrationen und erheblichen Geräuschen verbunden.

Die Messeinrichtungen 20, 22, 24, 30, 32, 40 sowie die Stellantriebe der Vorleitgitter 26, 36 und des Bypassventils 42 sind mit einer Steuereinheit ST des Verdichters 10 verbunden. Die Steuereinheit ST ist mit einer Bedieneinheit verbunden, die als Mensch-Maschine-Schnittstelle dient und über die Messwerte und Betriebszustände des Verdichters 10 ausgegeben und Parameter des Verdichters 10 eingegeben werden können. Ferner ist die Steuereinheit ST mit einem Leitsystem LS verbunden, das einen übergeordneten Prozess steuert.

Der Verdichter 10 ist als so genannte Package Unit ausgeführt, bei der die Steuereinheit ST den Verdichter 10 steuert und überwacht. Das Leitsystem LS gibt beispielsweise der Steuereinheit ST einen Sollwert vor, wobei auch weitere Überwachungs- und Bedienfunktionen durch das Leitsystem erfolgen können. Vorzugsweise sind über das Leitsystem die gleichen Überwachungs- und Bedienfunktionen möglich, wie mit Hilfe der Bedieneinheit BE. Sowohl die Bedieneinheit BE als auch das Leitsystem LS sind vorzugsweise über eine Datenverbindung mit der Steuerung ST verbunden. Erfindungsgemäß wird zur Überwachung des Fehlerzustandes des Verdichters 10 ein akustischer Sensor, insbesondere ein Mikrophon oder ein Körperschallsensor, eingesetzt, der charakteristische Geräusche des Verdichters erfasst. Mit Hilfe einer Auswerteeinheit kann mit Hilfe der erfassten Geräusche ein Fehlerzustand des Verdichters 10 auf relativ einfache Art und Weise bestimmt werden. Diese Auswerteeinheit kann eine separate Baueinheit sein oder als Soft- oder Hardware in der Steuereinheit ST enthalten sein.

Bei einem zweiten Aspekt der Erfindung wird mit Hilfe einer Messeinrichtung ein Betriebsparameter des Verdichters 10 wiederholt erfasst und der Gradientenwert des Betriebsparameters wird wiederholt bestimmt. Ein solcher Betriebsparameter kann beispielsweise der eingangsseitige Druck P1, der ausgangsseitige Druck P3, der Motorstrom, die Motorleistung, der Differenzdruck zwischen ausgangsseitigem Druck und eingangsseitigem Druck, die Fördermenge, ein vom Verdichter abgegebener Schall, die eingangsseitige Temperatur T1 und/oder die ausgangsseitige Temperatur T3 sein. Dabei wird das Unterschreiten eines negativen Gradientengrenzwertes und das Überschreiten eines positiven Gradientengrenzwertes überwacht.

Durch das Erfassen der positiven und der negativen Gradientengrenzewerte werden Fehlerzustände des Verdichters 10 relativ sicher erfasst. Somit werden Fehlreaktionen der Steuereinheit ST auf einfache Art und Weise vermieden. Beim Feststellen eines solchen Fehlerzustandes kann der Verdichter 10 abgeschaltet werden oder es werden geeignete Maßnahmen getroffen, um den Fehlerzustand des Verdichters 10 zu beseitigen. Beispielsweise kann die Steuereinheit ST das Bypassventil 42 derart ansteuern, dass Gas von der Druckseite des Verdichters 10 zur Saugseite des Verdichters 10 in Richtung des Pfeils P3 durch die Bypassleitung 44 strömt. Dadurch wird die durch den Verdichter 10 geförderte Gasmenge erhöht.

Insbesondere mit Hilfe der Vorleitgitter 26, 36 und des Bypassventils 42 wird die Menge des zum Verdichter 10 geförderten Gases eingestellt. Die vom Verdichter zu fördernde Mindestmenge ist vom Druckverhältnis des druckseitigen Enddrucks P3 und des saugseitigen Eingangsdrucks P1 des Verdichters 10 abhängig. Bei einem relativ geringen Druckverhältnis P3/P1 ist eine geringere vom Verdichter 10 zu fördernde Mindestmenge möglich, als bei höheren Druckverhältnissen. Durch die Abhängigkeit der Mindestmenge vom Druckverhältnis ergibt sich eine so genannte Pumpgrenze. Mit Hilfe der Steuereinheit ST wird der Verdichter 10 so gesteuert, dass die zum Ermitteln eines aktuellen Arbeitspunktes des Verdichters notwendigen Betriebsgrößen ermittelt werden und der Arbeitspunkt des Verdichter bestimmt wird. Der Arbeitspunkt des Verdichters 10 wird derart geregelt, dass die Pumpgrenze nicht überschritten wird. Diese Regelung wird auch als Pumpgrenzregelung bezeichnet.

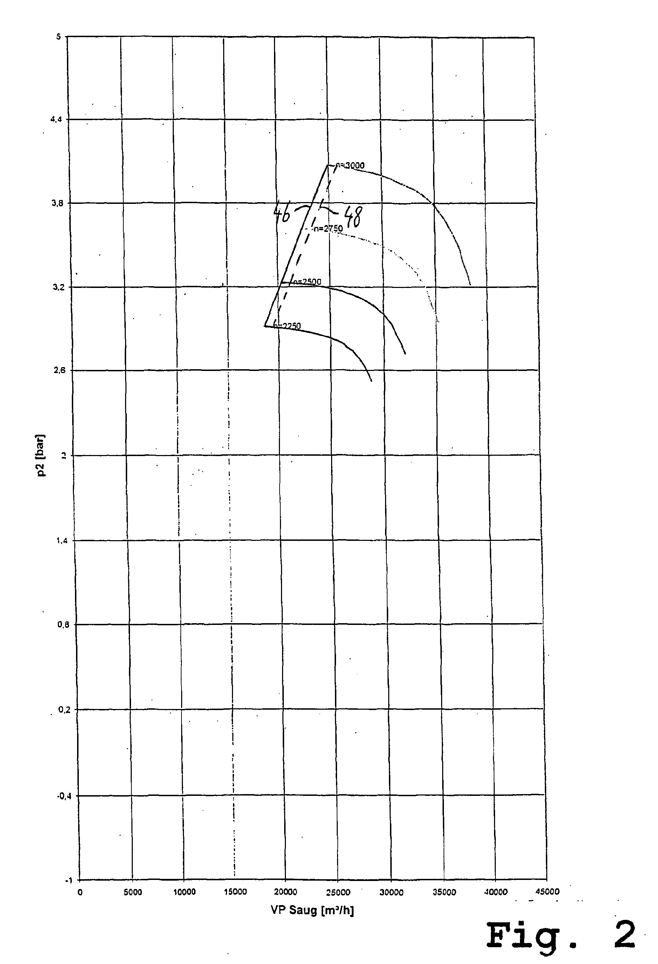

In Fig. 2 ist ein Diagramm mit einem so genannten Kennfeld des Verdichters 10 nach Fig. 1 dargestellt. Der Verdichter 10 hat einen Antrieb, z.B. einen Elektromotor oder eine Dampfturbine, dessen bzw. deren Abriebsdrehzahl zumindest im Bereich zwischen 2250 und 3000 Umdrehungen stufenlos einstellbar ist. Abhängig von dem auf der Ordinate angegebenen Enddrucks p2 ergibt sich für die auf der Abszisse aufgetragenen Fördermenge VP Saug eine mit 46 bezeichnete Pumpgrenze für den angegebenen Drehzahlbereich. Ferner wird eine im Wesentlichen zur Pumpgrenze 46 parallele Linie 48 festgelegt, die als Regelgrenze für die durchzuführende Pumpgrenzregelung dient.

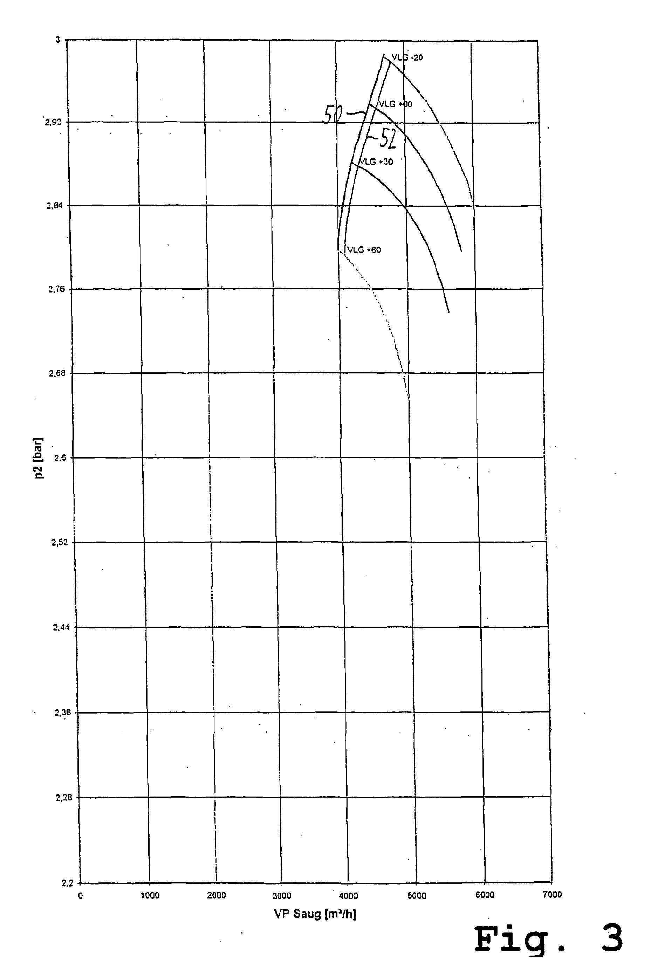

In Fig. 3 ist ein Diagramm mit einem Kennlinienfeld eines Verdichters mit fester Antriebsdrehzahl und verstellbarem Vorleitgitter 26 dargestellt, der den prinzipiellen Aufbau des Verdichters 10 nach Fig. 1 hat, jedoch andere Mengen- und Leistungsauslegungen gegenüber dem in Fig. 2 dargestellten Verdichterkennfeld hat. Im Diagramms nach Fig. 3 ist auf der Ordinate der Enddruck p2 des Verdichters 10 angegeben, wobei der saugseitige Druck als konstant angenommen wird. Die Pumpgrenzlinie 50 ergibt sich abhängig von dem im Bereich von -20°C bis +60°C verstellbaren Vorleitgitter, wobei die Pumpgrenze für eine Vorleitgittereinstellung VLG vom Enddruck p2 und der auf der Abszisse angetragenen Fördermenge abhängig ist. Die im Wesentlichen zur Pumpgrenze 50 parallel verlaufende Linie 52 bildet eine Begrenzungslinie, ab der die Pumpgrenzregelung, insbesondere durch das Öffnen des Bypassventils 42 eingreift. Die Pumpgrenzregelung wird mit Hilfe der Steuereinheit ST durchgeführt.

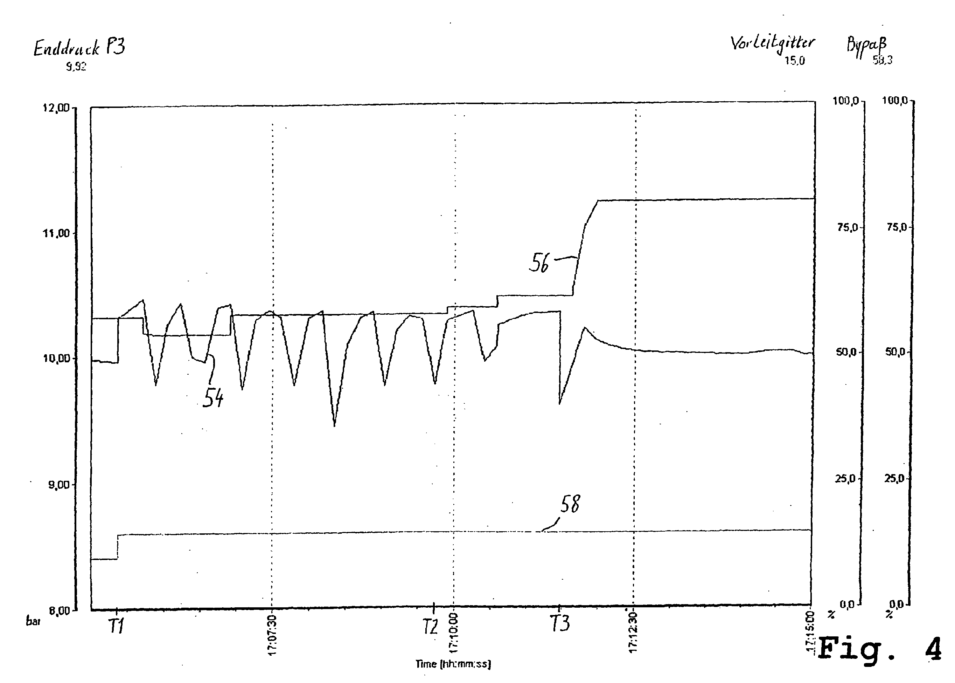

In Fig. 4 ist der Zeitverlauf des Enddrucks P3, der Stellung des Bypassventils 42 und die Stellung des Vorleitgitters 26 dargestellt, wobei der Graph 54 den Zeitverlauf des Enddrucks P3, der Graph 56 den zeitlichen Verlauf der Stellung des Bypassventils 42 und der Graph 58 den zeitlichen Verlauf der Stellung des Vorleitgitters 26 angibt. Die Stellungen des Vorleitgitters 26 und des Bypassventils 42 sind mit einer Skaleneinteilung von 0 bis 100 % angegeben, wobei der Stellbereich des Vorleitgitters von -15° bis +50° auf 0 bis 100 % abgebildet ist. Das Bypassventil 42 ist bei 0 % voll geschlossen und bei 100 % voll geöffnet.

Die Pumpgrenzregelung der Steuereinheit ST wurde für die Aufnahme des in Fig. 4 dargestellten zeitlichen Verlaufs der Graphen 54, 56 und 58 deaktiviert und der Drucksollwert auf 11 bar eingestellt. Daraufhin hat die Steuerung ST das Vorleitgitter von der Stellung 10 % auf 15 % zum Zeitpunkt T1 geändert. Ferner hat die Steuereinheit das Bypassventil auf ca. 58 % geschlossen. Durch Ändern der Vorleitgitterstellung von 10 auf 15 % zum Zeitpunkt T1 erfolgt ein erheblicher Druckanstieg von etwa 10 auf 10,4 bar. Durch diesen Druckanstieg des Enddrucks P3 des Verdichters 10 wird die Pumpgrenzlinie 50 des Verdichters 10 überschritten und der Massenstrom reißt ab, wie bereits beschrieben. Dadurch ergibt sich ein Druckabfall von 10,4 auf etwa 9,8 bar.

Anschließend wird der Massenstrom durch den Verdichter 10 wieder aufgebaut und der Druck steigt von 9,8 wieder auf etwa 10,4 bar an. Je nach Strömungsverhältnissen und den Zeitpunkten der Messwerterfassung ergeben sich unterschiedliche Maximal- und Minimalwerte bei den Druckschwankungen des Enddrucks P3 des Verdichters 10 bei dem in Fig. 4 dargestellten fehlerhaften Zustand. Wie bereits erläutert, wird dieser Fehlerzustand auch als Pumpen des Verdichters 10 bezeichnet. Diese Schwankungen beim Abreißen und Wiederaufbauen des Massenstroms werden auch in anderen Betriebsparametern des Verdichters 10 sichtbar, insbesondere beim eingangsseitigen Druck P1, beim Motorstrom, bei der Motorleistung, beim Differenzdruck zwischen eingangsseitigem und ausgangsseitigem Druck, bei der Fördermenge, beim vom Verdichter 10 abgegebenem Schall, bei der eingangsseitigen Temperatur T1 sowie bei der ausgangsseitigen Temperatur T3.

Zum Zeitpunkt T2 wird begonnen, das Bypassventil 42 schrittweise zu öffnen, wie der Verlauf des Graphen 56 ab dem Zeitpunkt T2 zeigt. Durch das Öffnen des Bypassventils 42 wird ab dem Zeitpunkt T3 erreicht, dass die Strömung durch den Verdichter 10 nachfolgend nicht mehr abreißt und der fehlerhafte Betriebszustand des Verdichters 10 beseitigt worden ist. Durch das Öffnen des Bypassventils 42 wird die Fördermenge durch den Verdichter 10 erhöht und gegebenenfalls der Differenzdruck zwischen Saugdruck P1 und Enddruck P3 des Verdichters 10 verringert. Durch Öffnen des Bypassventils 42 und/oder durch Ändern der Stellung des Vorleitgitters 26 und/oder des Vorleitgitters 36 kann somit der Arbeitspunkt des Verdichters 10 nach dem Überschreiten der Pumpgrenze wieder in einen Bereich unterhalb der Pumpgrenze zurückgeführt werden. Das durch das Öffnen des Bypassventils wird der Verdichter somit entlastet.

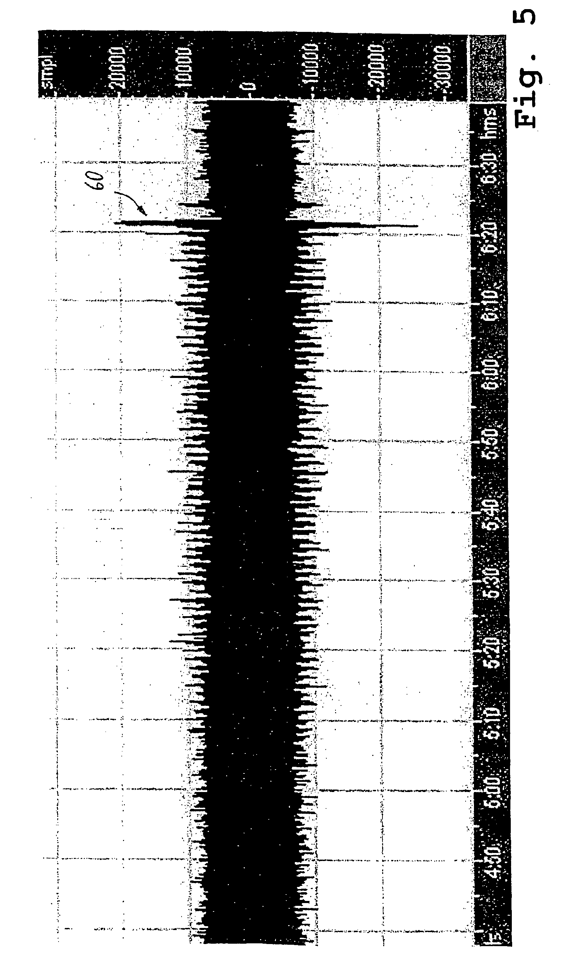

In Fig. 5 ist ein Bildschirmausdruck einer Messanordnung zum Erfassen des Schallpegels eines Verdichters 10 vor dem und bei dem Überschreiten der Pumpgrenze 50 nach Fig. 3 dargestellt. Der Schall wurde mit Hilfe eines Mikrophons, Hersteller Sony, Typ ECM-MS 907, aufgenommen und mit Hilfe einer üblichen Soundkarte eines Personalcomputers bei einer Abtastfrequenz von 44,1 kHz mit einer Auflösung von 16 Bit aufgezeichnet. Das Vorleitgitter 26 ist bei dieser Messung auf 70 % des Einstellbereichs eingestellt worden. Auf der Abszisse ist die Zeit und auf der Ordinate der Pegelausschlag des Schalls angetragen. Ab etwa dem Zeitpunkt 5:10 ist im Verlauf des Signals zu sehen, dass einzelne Pegelausschläge des Schalls spitzer werden und sich die Differenz zwischen aufeinander folgenden Minimal- und Maximalpegeln erhöht. Ab diesem Zeitpunkt 5:10 ist der Verdichter der Pumpgrenzlinie 50 stark angenähert und es beginnt ein instabiler Zustand, der auch als Vorpumpen bezeichnet wird. Dieser Betriebszustand hält bis zum Zeitpunkt 6:20 an. Unmittelbar danach erfolgt ein Pumpstoß, der in Fig. 5 mit 60 bezeichnet ist.

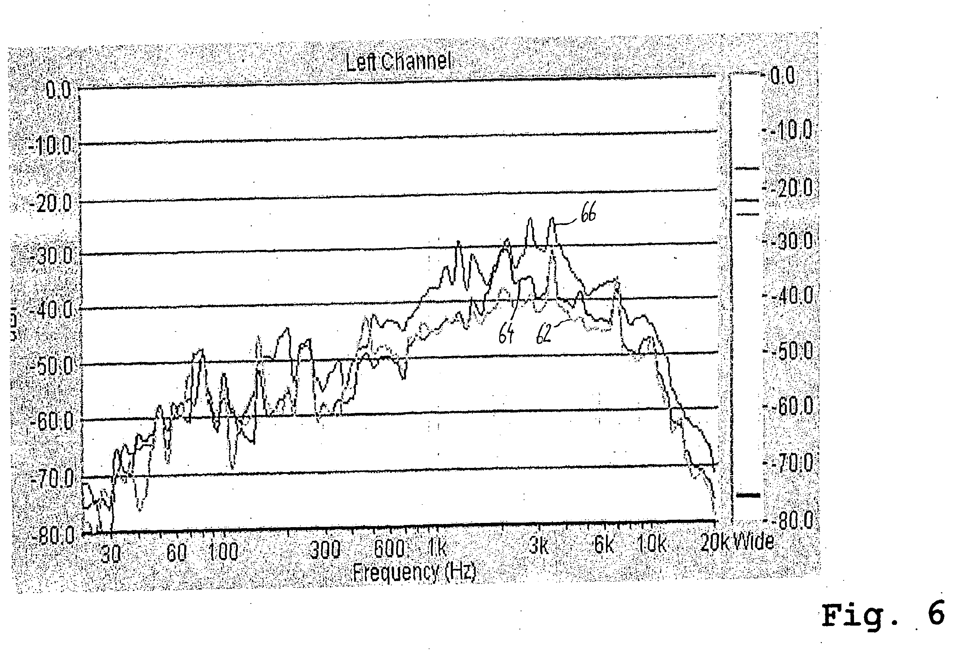

In Fig. 6 ist ein Diagramm mit der Spektralverteilung im Bereich zwischen 30 Hz und 20 kHz des vom Verdichter 10 abgegebenen Schalls dargestellt, wobei der Graph 62 den Zustand des Verdichters 10 vor dem instabilen Zustand etwa zum Zeitpunkt 5:00 nach Fig. 5, der Graph 64 das Spektrum während des Vorpumpens, z.B. zum Zeitpunkt 5:30, und der Graph 66 das Spektrum des Schalls während des Pumpstoßes, z. B. zum Zeitpunkt 6:22 angibt. Im Bereich zwischen 1800 bis 3300 Hz ist ein signifikanter Anstieg des Graphen 64 im Unterschied zum Graphen 62 vorhanden, durch den das Vorpumpen beim Verdichter 10 aufgrund des Pegelunterschieds zwischen dem Graphen 62 und 64 in diesem Bereich bestimmbar ist.

Auch in anderen Frequenzbereichen sind erhebliche Unterschiede zwischen den Amplituden der einzelnen Graphen 62, 64, 66 vorhanden, so dass ein geeigneter Frequenzbereich zur Auswertung genutzt werden kann, um zu ermitteln, ob ein instabiler Betriebszustand des Verdichters 10 vorliegt. Insbesondere sollte ein Frequenzbereich ausgewählt werden, bei dem über den gesamten Arbeitsbereich des Verdichters 10 Unterschiede zwischen stabilen und instabilen Betriebszuständen des Verdichters 10 stark ausgeprägt sind, um einen fehlerhaften Zustand des Verdichters 10 durch Überwachen nur dieses Frequenzbereichs sicher ermitteln zu können. Der geeignete Frequenzbereich ist dabei jedoch insbesondere von der Bauart und den konkreten Betriebsbedingungen des Verdichters 10 abhängig. Gegebenenfalls ist in einem Probelauf des Verdichters 10 zu ermitteln, ob ein ausgewählter Frequenzbereich dann bei einer konkreten Verdichteranlage das sichere Auseinanderhalten von einem Fehlerzustand und einem fehlerfreien Zustand tatsächlich ermöglicht.

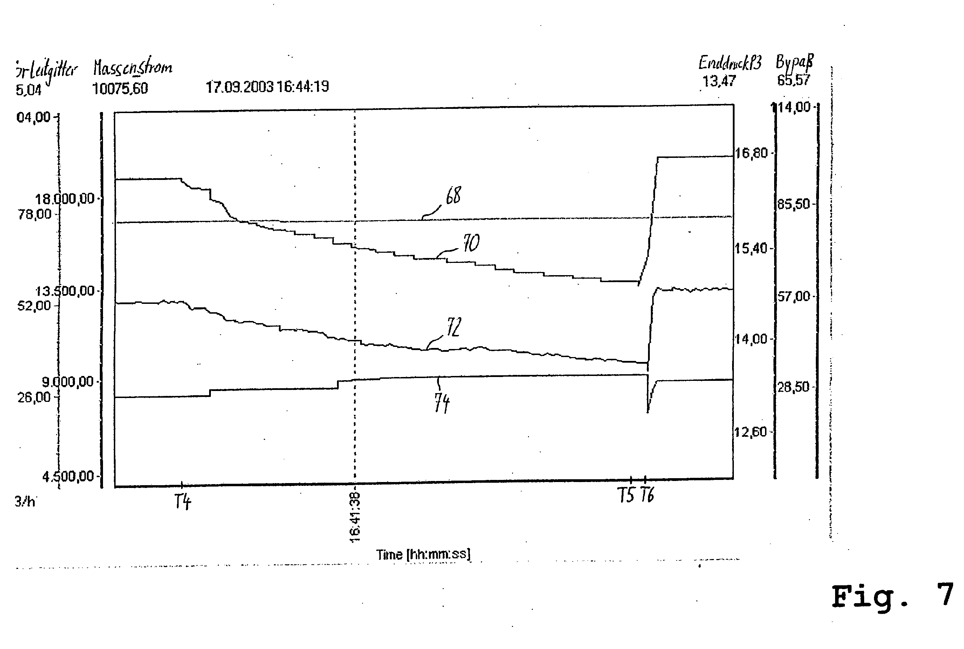

In Fig. 7 ist der zeitliche Verlauf der Stellung des Vorleitgitters 26, der Stellung des Bypassventils 42, der geförderten Gasmenge durch den Verdichter 10 und des Enddrucks P3 des Verdichters 10 dargestellt. Die Stellung des Vorleitgitters 26 ist dabei mit Hilfe des Graphen 68 dargestellt und beträgt über den ganzen dargestellten Zeitraum etwa 75 %. Die Stellung des Bypassventils 42 ist mit Hilfe des Graphen 70 dargestellt, wobei ab dem Zeitpunkt T4 das Bypassventil 42 fortlaufend bis zum Zeitpunkt T5 geschlossen wird. Abschließend wird das Bypassventil 42 relativ schnell von etwa 60 % auf 100 % geöffnet. Mit Schließen des Bypassventils 42 nimmt die durch den Verdichter 10 geförderte Menge, d.h. der Massenstrom durch den Verdichter 10, ab, wie der Verlauf des Graphen 72 zeigt.

Zum Zeitpunkt T5 erfolgt ein Pumpstoß durch das Abreißen des Massenstroms, wobei beim Pumpstoß kurzzeitig Gas von der Druckseite in den Verdichter 10 gedrückt wird. Die geförderte Menge bricht dabei kurzzeitig während des Pumpstoßes zum Zeitpunkt T6 ein und steigt durch das Öffnen des Bypassventils 42 unmittelbar danach wieder steil an. Durch das Schließen des Bypassventils 42 vom Zeitpunkt T4 an steigt der mit Hilfe des Graphen 74 dargestellte Enddruck P3 des Verdichters 10 kontinuierlich bis zum Zeitpunkt T6 an, zu dem der Enddruck P3 durch den Pumpstoß beim Abreißen des Massenstroms stark zusammenbricht und anschließend beim Neuaufbau der Strömung wieder relativ steil ansteigt. Durch das Öffnen des Bypassventils 42 ist jedoch nach dem Pumpstoß ein geringerer Enddruck P3 als vor dem Pumpstoß vorhanden.

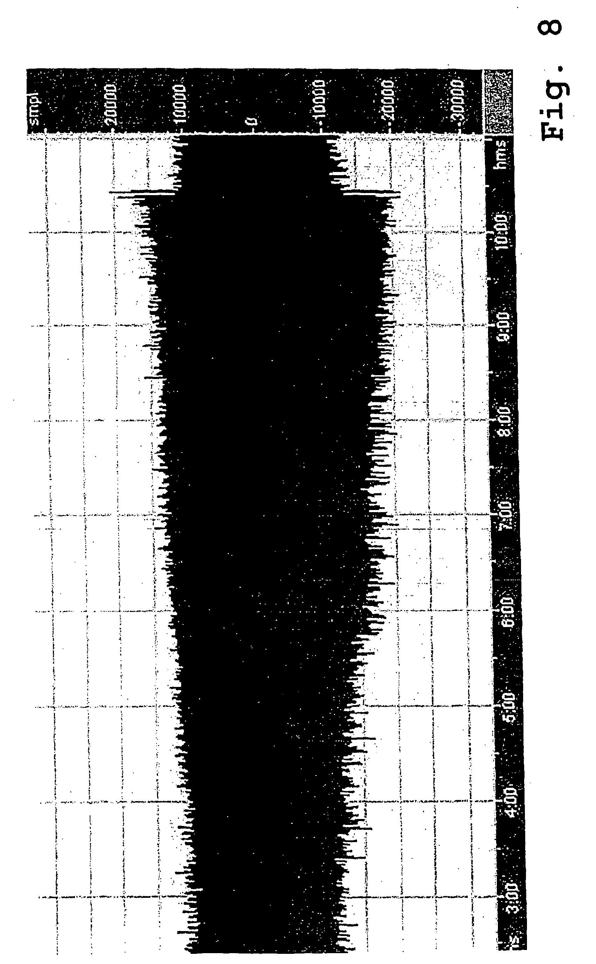

In Fig. 8 ist der Verlauf des vom Verdichter 10 während des in Fig. 7 dargestellten Betriebsverlaufs abgegebenen Schalls gezeigt, wobei der vom Verdichter 10 abgegebene Schall mit Hilfe eines Körperschallsensors erfasst worden ist. Ab dem Zeitpunkt 4:00, der in etwa dem Zeitpunkt T4 nach Fig. 7 entspricht, steigt der Pegel des vom Verdichter 10 abgegebenen Schalls kontinuierlich bis etwa zum Zeitpunkt 10:20, d.h. bis etwa zum Zeitpunkt T5 an. Somit steigt der vom Verdichter 10 abgegebene Schall kontinuierlich mit Schließen des Bypassventils 42 an und erreicht sein Maximum bei etwa zum Zeitpunkt 10:25 und somit etwa zum Zeitpunkt T6. Nach dem Pumpstoß und nach dem anschließenden Öffnen des Bypassventils 42 nimmt der vom Verdichter 10 abgegebene Schall stark ab, wie im Bereich ab 10:30 dargestellt ist.

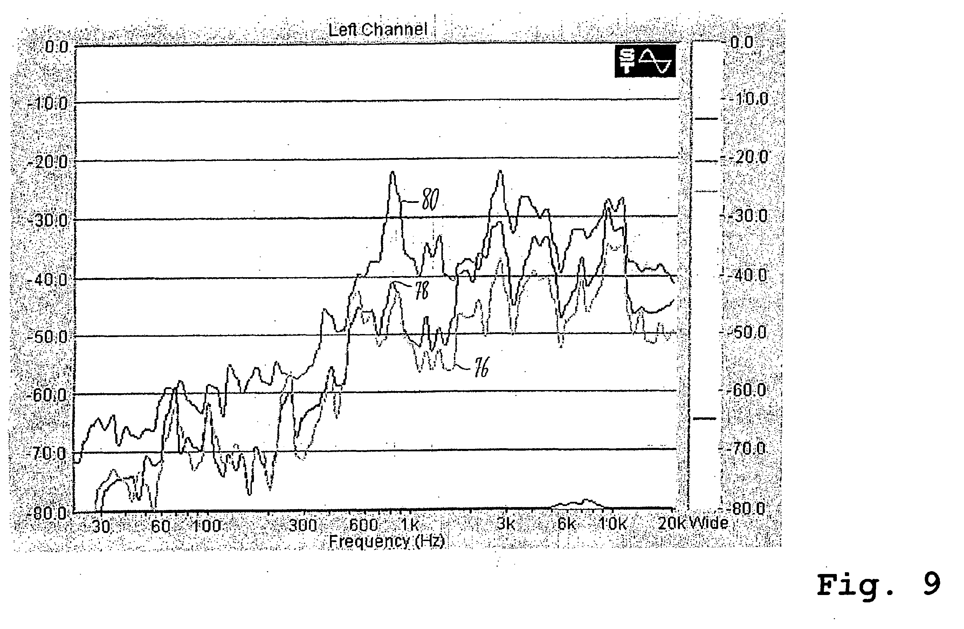

In Fig. 9 ist ähnlich wie in Fig. 6 das Spektrum des vom Verdichter 10 abgegebenen Körperschalls dargestellt. Der Graph 76 zeigt dabei die spektrale Verteilung des Schalls zum Zeitpunkt 3:00, der Graph 78 etwa zum Zeitpunkt 9:00 und der Graph 80 beim Pumpstoß etwa zum Zeitpunkt 10:25. Es ist bei etwa 850 Hz eine starke Differenz zwischen den Graphen 76, 78 zum Graphen 80 durch die starke Pegelerhöhung des Graphen 80 vorhanden, wodurch sich diese Frequenz besonders zum Unterscheiden eines fehlerfreien und eines fehlerhaften Betriebszustandes eignet.

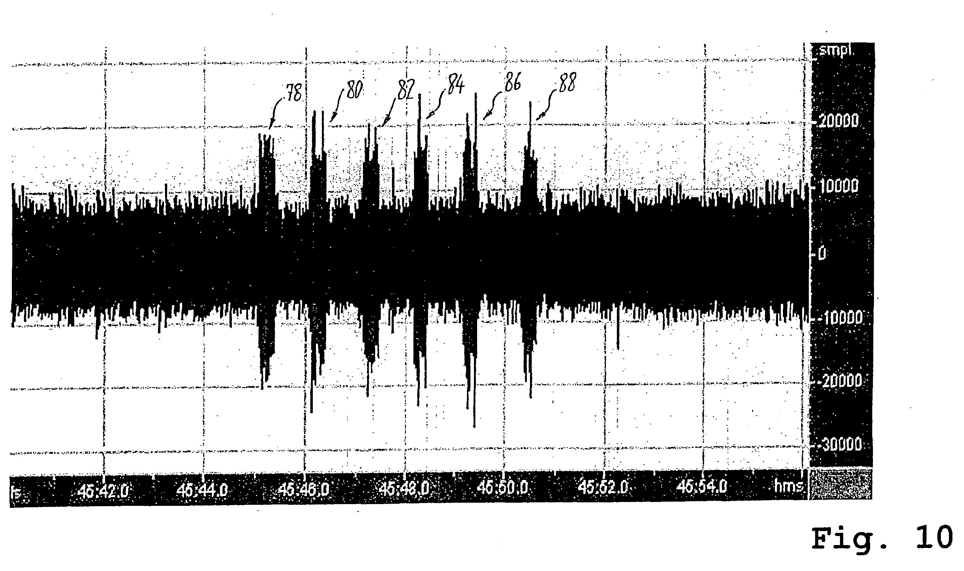

Im Unterschied zu dem Verdichter 10 nach den Fig. 1 bis 9, ist in Fig. 10 der von einem Einwellenturboverdichter mit drei auf einer Welle fest angeordneten radialen Laufrädern abgegebene Schallpegel dargestellt, wobei vor dem zweiten Laufrad ein fest voreingestelltes Vorleitgitter angeordnet ist. Dieser Verdichter hat etwa zum Zeitpunkt 45:45 die Pumpgrenze überschritten, wodurch der vom Verdichter abgegebene Schall beim Überschreiten der Pumpgrenze erfolgten Pumpstoß 78 stark ansteigt. Nach dem Pumpstoß 78 wird der Massenstrom durch den Verdichter wieder aufgebaut, wobei der Schall des Verdichters nach dem Pumpstoß 78 geringer ist als vor dem Pumpstoß 78. Gleiches ist bei den nachfolgenden Pumpstößen 80 bis 88 zu sehen, wobei nach dem Pumpstoß 88 der normale Arbeitsbereiches des Verdichters unterhalb der Pumpgrenze erreicht ist und der vom Verdichter abgegebene Schall wieder ansteigt.

Ein Überschreiten von absoluten Schallwerten erscheint daher zumindest für ein sicheres Ermitteln eines Fehlerzustandes nicht für alle Verdichteranordnungen geeignet. Durch das Erfassen des Gradienten, d.h. des Anstiegs, des aufgenommenen Schallssignals und das Vergleichen des ermittelten Gradienten mit einem Gradientengrenzwert kann · ein Fehlerzustand sicher von einem fehlerfreien Zustand unterschieden werden. Dadurch lassen sich auch die starken Änderungen des Pegels des vom Verdichter abgegebenen Schalls vor und nach jedem der Pumpstöße 78 bis 88 sicher ermitteln. Diese deutlichen Pumpstöße 78 bis 88 werden auch als Klassik-Surge bezeichnet.

Das Schallsignal wurde bei den der Fig. 10 zugrundeliegenden Schallmessungen mit Hilfe eines Körperschallsensors aufgenommen. Ein solcher Körperschallsensor kann z.B. ein Piezofoliensensor VSA 106 S60-5-01 der Firma OPS Automation AG sein.

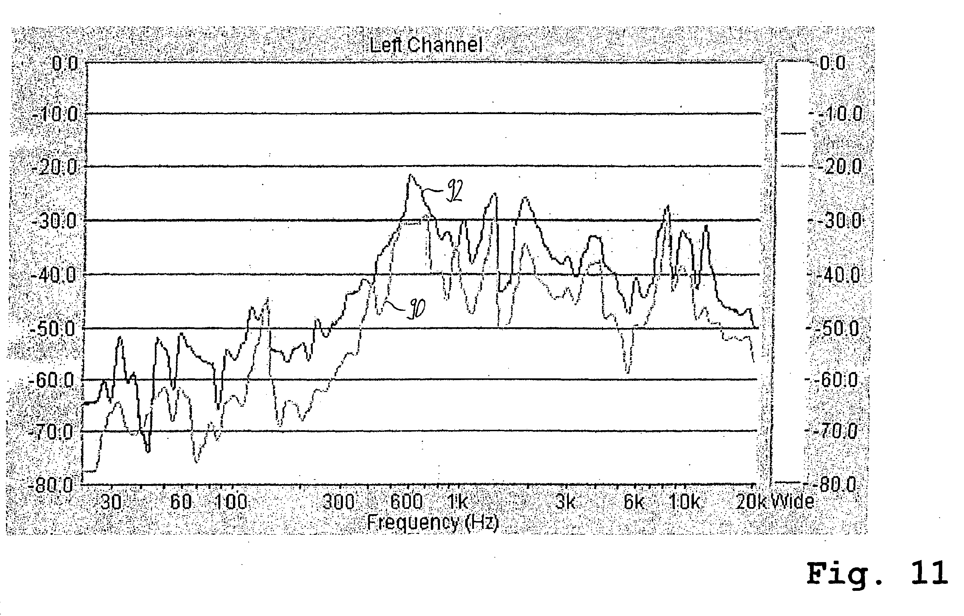

In Fig. 11 ist ein Diagramm mit der Spektralverteilung des Schalls nach Fig. 10 zum Zeitpunkt 45:44 mit Hilfe des Graphen 90 und zum Zeitpunkt 45:45 während des Pumpstoßes 78 mit Hilfe des Graphen 92 dargestellt. Insbesondere bei den Frequenzen 600 Hz und 1900 Hz ist ein signifikanter Unterschied zwischen dem Graphen 90 und 92 von 7 dB sichtbar. Bei 5400 Hz und 11700 Hz ist sogar ein Unterschied von über 10 dB vorhanden. Ferner sind zwei weitere Signalspitzen bei 7850 und 9500 Hz vorhanden. Die Frequenzen der einzelnen Signalerhöhungen sind von der Anzahl der in den einzelnen auf der gemeinsamen Welle angeordneten Verdichterlaufrädern enthaltenen Schaufeln abhängig. Das Verdichterlaufrad 1 hat 59 Schaufeln, wodurch sich die Erhöhung bei einer Drehzahl von 7980 Umdrehungen pro Minute eine Blattfolgefrequenz von 7850 Hz ergibt. Das Laufrad 2 hat 67 Schaufeln, wodurch sich bei einer Drehzahl von 8220 Umdrehungen eine Blattfolgefrequenz der einzelnen Schaufelblätter von 9200 Hz ergibt. Das Laufrad 3 hat 89 Schaufeln, wodurch sich bei einer Drehzahl von 7860 Umdrehungen pro Minute eine Blattfolgefrequenz von 11700 Hz ergibt.

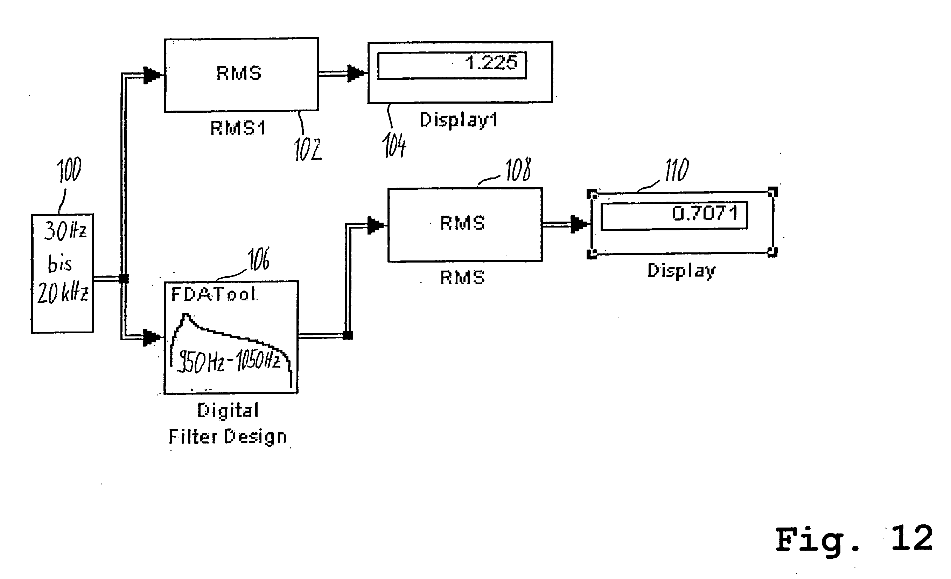

In Fig. 12 ist ein Blockschaltbild einer Auswerteeinheit zum Auswerten eines z.B. mit Hilfe eines Körperschallsensors aufgenommenen Schallsignals eines Verdichters 10 dargestellt. Diese Auswerteeinheit stellt einen so genannten FER-Filter zur Verfügung, der ein Ausgangssignal nur im Frequenzbereich von 950 bis 1050 Hz zur Verfügung stellt. Der Körperschallsensor 100 ermittelt den vom Verdichter abgegebenen Signalpegel im Bereich von 30 Hz bis 20 kHz. Dieses Signal wird einer Baueinheit 102 zugeführt, die den Mittelwert des Signalpegels über den gesamten Frequenzbereich 30 Hz bis 20 kHz bildet, der dann mit Hilfe eines Displays 104 angezeigt wird. Mit Hilfe eines digitalen Filters 106 wird das vom Körperschallsensor 100 abgegebene Signal gefiltert, wobei der Filter 106 nur die Signale des vom Verdichter im Frequenzbereich 950 Hz bis 1050 Hz abgegebenen Schalls durchlässt. Der Filter 106 fungiert somit als Bandpassfilter, der die Signale der übrigen Frequenzen herausfiltert.

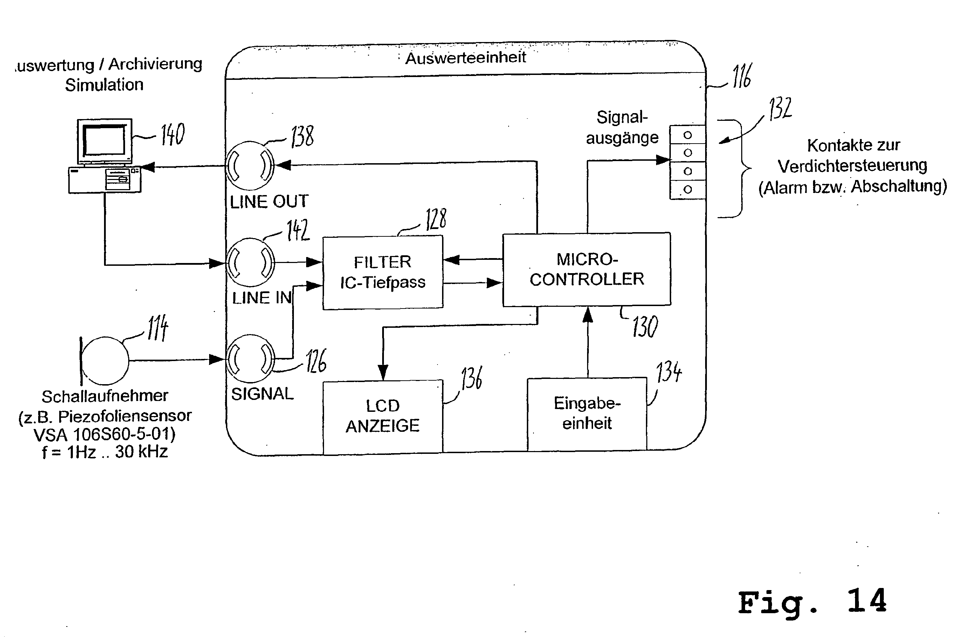

Das vom Körperschallsensor 100 im Frequenzbereich 950 bis 1050 Hz abgegebene Signal wird dann einer Baueinheit 108 zum Ermitteln des Mittelwerts der Signale in diesem Frequenzbereich zugeführt. Der von der Baueinheit 108 ermittelte Mittelwert wird auf dem Display 110 angezeigt. Der Mittelwert wird von der Baueinheit 108 fortlaufend in festen Zeitabständen, z.B. alle 10 Millisekunden ermittelt. Das Signal der Baueinheit 108 wird der Steuereinheit ST zugeführt, die den Gradienten zwischen zwei nacheinander ermittelten Signalen bestimmt und diesen ermittelten Gradienten mit einem Gradientengrenzwert vergleicht. Mit Hilfe des Vergleichsergebnisses werden weitere Steuerschritte durch die Steuereinheit ST durchgeführt, die im Zusammenhang mit Fig. 14 ausführlich beschrieben werden.

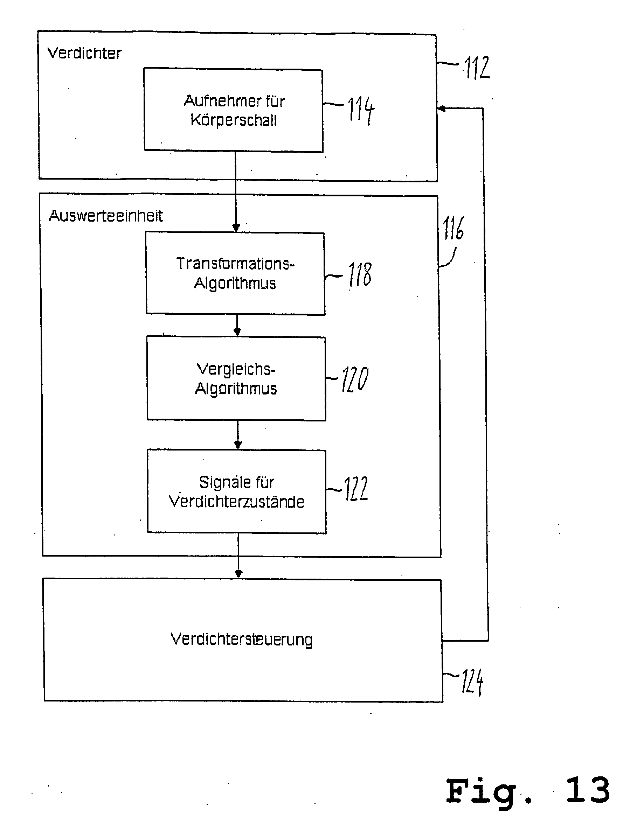

In Fig. 13 ist ein Blockschaltbild einer Anordnung zum Auswerten eines mit Hilfe eines Körperschallsensors aufgenommenen Schallsignals eines Verdichters 112 dargestellt. Am Verdichter 112 ist ein Körperschallsensor 114 an einer geeigneten Stelle angeordnet, insbesondere ist er mit dem Verdichtergehäuse fest verbunden. Das mit Hilfe des Körperschallsensors 114 ermittelte Schallsignal wird einer Auswerteeinheit 116 zugeführt, die das zugeführte Signal mit Hilfe eines Transformationsalgorithmus 118, insbesondere einem Fourier-Transformationsalgorithmus, verarbeitet. Das transformierte Signal wird einem Vergleichsalgorithmus 116 zugeführt, der das transformierte Signal mit einem Grenzwert vergleicht. Vorzugsweise vergleicht er das mit Hilfe des Transformationsalgorithmus 118 ermittelte Gradientensignal mit einem positiven Grenzwert und einem negativen Grenzwert. Abhängig vom Vergleichsergebnis gibt die Auswerteeinheit Signale 122 an die Steuereinheit 124 des Verdichters. So kann die Auswerteeinheit 116 insbesondere beim Überschreiten eines positiven Grenzwertes und dem Unterschreiten eines negativen Grenzwertes innerhalb eines voreingestellten Zeitraums ein Fehlersignal an die Verdichtersteuerung ausgeben, wodurch die Verdichtersteuerung 124 über den Fehlerzustand des Verdichters 112 informiert ist und geeignete Steuervorgänge aktivieren kann, um den Fehlerzustand des Verdichters zu beseitigen. Beispielsweise kann die Verdichtersteuerung 124 en Bypass- bzw. ein Ausblaseventil öffnen, um den Massestrom durch den Verdichter 112 zu erhöhen. Insbesondere dann, wenn mit Hilfe des Verdichters 112 Luft gefördert und verdichtet wird, kann anstatt einer Bypassrückführung über ein Bypassventil 42 lediglich aus Ausblaseventil, ähnlich dem Bypassventil 42 vorgesehen sein, über das das verdichtete Gas in die Umgebung entweichen kann. Vorzugsweise ist einem solchen Ausblaseventil ein Schalldämpfer nachgeordnet.

In Fig. 14 ist die Erfassungs- und Auswerteeinheit nach Fig. 13 dargestellt. Der Schallaufnehmer 114, der z.B. als Piezofoliensensor VSA106S60-5-01 ausgeführt ist, ist mit dem Gehäuse des Verdichters 112 auf geeignete Art und Weise verbunden. Dieser Schallaufnehmer 114 hat einen Frequenzbereich von 1 Hz bis 30 kHz. Der Schallaufnehmer 114 ist mit einem Signaleingang 126 der Auswerteeinheit 116 verbunden. Das vom Schallaufnehmer 114 der Auswerteeinheit 116 zugeführte Signal wird dem Eingang eines Tiefpassfilters 128 zugeführt, der, wie bereits beschrieben, aus dem aufgenommenen Frequenzspektrum einen geeigneten Frequenzbereich herausfiltert und das gefilterte Signal einem Mikrokontroller 130 zuführt. Der Mikrokontroller 130 führt den Transformationsalgorithmus 118 sowie den Vergleichsalgorithmus 120 durch und gibt Signale an Signalsausgänge 132 aus. Die an den Signalausgängen 132 der Auswerteeinheit 116 ausgegebenen Signale werden der Verdichtersteuerung 124 zugeführt, die geeignete Maßnahmen ergreift, um den festgestellten Fehlerzustand zu beseitigen.

Der Mikrokontroller 130 ist mit einer Eingabeeinheit 134 verbunden, über die Eingaben, insbesondere Parametereingaben zum Auswählen eines durch den Filter 128 zu filternden Frequenzbereich und/oder Grenzwerte der ermittelten Gradienten eingegeben werden können. Der Mikrokontroller 130 ist ferner mit einer LCD-Anzeigeeinheit 136 verbunden, durch die eingestellte sowie einzugebende Parameter, Bedieninformationen und Fehlerinformationen ausgegeben werden können.

Mit Hilfe des Mikrokontrollers 130 können die Filtereigenschaften des Filters 128, insbesondere die Filterart und die Filtereigenschaften, eingestellt werden. Der Mikrokontroller 130 verarbeitet das Signal mit Hilfe der Algorithmen 118, 120 derart, dass die Amplitude einzelner Frequenzbänder bestimmbar ist. Die Amplitudenänderung einzelner Frequenzbänder wird dann auf eine Grenzwertüberschreitung überprüft. Stellt der Mikrokontroller 130 einen Fehlerzustand fest, wird ein Fehlersignale mit Hilfe der Signalausgänge 132 ausgegeben. Insbesondere wird an mindestens einem Signalausgang 132 ein Stromkreis unterbrochen, wodurch der Verdichtersteuerung 124 ein Fehlersignal übermittelt wird.

Das mit Hilfe des Filters 128 gefilterte und dem Mikrokontroller 130 zugeführte Signal wird vom Mikrokontroller 130 einem Line-Out-Ausgang 138 zugeführt, der mit einem Simulations- und Auswertecomputer 140 verbunden ist. Beispielsweise ist der Line-Out-Ausgang 138 der Auswerteeinheit 116 mit einem Line-In-Eingang des Simulations- und Auswertecomputers 140 verbunden. Ein mit Hilfe des Schallaufnehmers 114 aufgenommenes Signal oder ein mit Hilfe des Simulations- und Auswertecomputers 140 erzeugtes Signal kann insbesondere über einen Line-Out-Ausgang des Simulations- und Auswertecomputers 140 ausgegeben werden. Das vom Simulations- und Auswertecomputer 140 ausgegebene Signal wird über einen Line-In-Eingang 142 der Auswerteeinheit 116 dem Filter 128 zugeführt und in gleicher Weise verarbeitet, wie das dem Signaleingang 126 vom Schallaufnehmers 114 zugeführte Signal. Dadurch können auf einfache Art und Weise Körperschallspektren mit Hilfe des Simulations- und Auswertecomputers erzeugt und gespeicherte Schallsignale insbesondere zu Testzwecken der Auswerteeinheit 116 zugeführt werden.

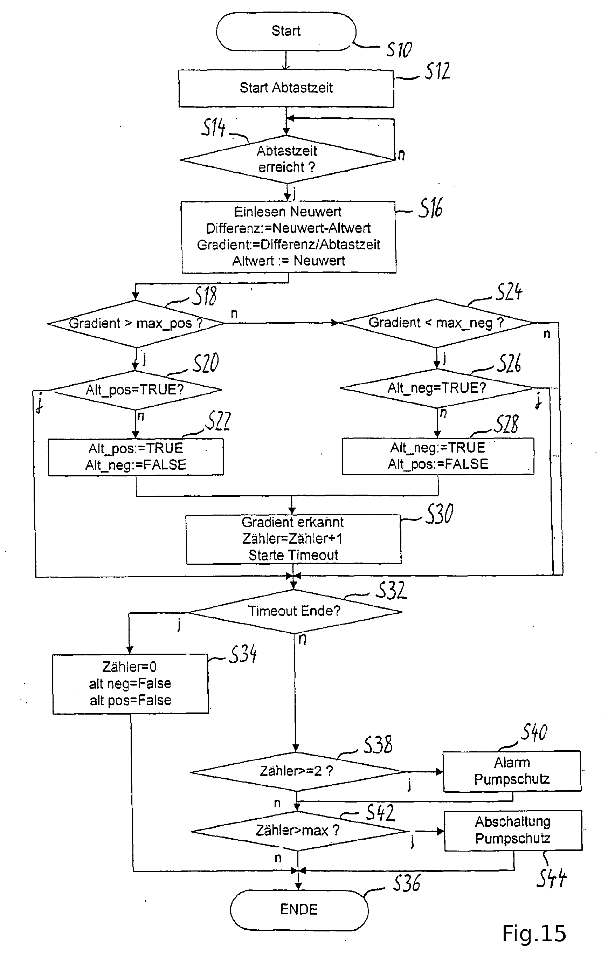

In Fig. 15 ist ein Ablaufplan zum Ermitteln eines fehlerhaften Zustandes eines Verdichters, insbesondere des Verdichters 10 oder 112, dargestellt. Der Ablauf wird im Schritt S10 gestartet. Anschließend wird im Schritt S12 die Abtastzeit festgelegt, wobei die Abtastzeit der Zeitraum zwischen zwei durchgeführten Messungen der zu überwachenden Betriebgröße ist. Die Abtastzeit kann z.B. als Parameter in der Auswerteeinheit 116 gespeichert sein. Anschließend wird im Schritt S14 überprüft, ob die Abtastzeit bereits erreicht ist und eine neue Messung durchgeführt werden soll. Ist das nicht der Fall, so wird der Schritt S14 wiederholt.

Ist die Abtastzeit bereits erreicht, so wird anschließend im Schritt S16 ein aktueller Messwert der überwachten Betriebsgröße, z.B. des Enddrucks des Verdichters 10, 112, erfasst und mit Hilfe einen Analog/Digital-Wandlers digitalisiert. Ferner wird die Differenz aus dem eingelesenen aktuellen Messwert und dem zuvor ermittelten gespeicherten alten Messwert ermittelt. Nachfolgend wird der gespeicherte alte Messwert mit dem ermittelten neuen Messwert überschrieben, so dass der ermittelte neue Messwert für die Differenzbildung mit dem nachfolgend ermittelten Messwert als alter Messwert zur Verfügung steht. Weiterhin wird der Gradient der Betriebsgröße aus dem bei der vorhergehenden Messung ermittelten alten Messwert und dem aktuell ermittelten Messwert gebildet, indem die Differenz der beiden Messwerte durch die Abtastzeit geteilt wird.

Im Schritt S18 wird nachfolgend überprüft, ob der im Schritt S16 ermittelte Gradient einen positiven Gradientengrenzwert überschreitet. Ist das der Fall, so wird anschließend im Schritt S20 überprüft, ob bereits zuvor ein positiver Grenzwert überschritten worden ist, d.h. ob eine Statusvariable zum Speichern des Zustandes einer positiven Gradientenüberschreitung der Status "wahr" zugewiesen worden ist. Ist das nicht der Fall, so wird anschließend im Schritt S22 die Statusvariable für eine positive Grenzwertüberschreitung auf "wahr" gesetzt und die Statusvariable für eine negative Grenzwertüberschreitung auf "falsch". Nachfolgend wird im Schritt S30 ein Zähler zum Erfassen der Grenzwertüberschreitungen um den Zählwert 1 inkrementiert. Anschließend wird der Ablauf im Schritt S32 fortgesetzt.

Wird im Schritt S22 jedoch festgestellt, dass die Statusvariable für die positive Grenzwertüberschreitung bereits den Zustand "wahr" hat, so wird der Ablauf ebenfalls im Schritt S32 fortgesetzt. Wird im Schritt S18 jedoch festgestellt, dass der positive Gradientengrenzwert durch den ermittelten Gradienten nicht überschritten worden ist, so wird anschließend im Schritt S24 überprüft, ob ein negativer Gradientengrenzwert durch den ermittelten Gradienten überschritten worden ist. Ist das nicht der Fall, so wird der Ablauf im Schritt S32 fortgesetzt. Wird im Schritt S24 jedoch festgestellt, dass der negative Gradientengrenzwert überschritten worden ist, so wird anschließend im Schritt S26 überprüft, ob die Statusvariable für die Überschreitung des negativen Gradientengrenzwertes bereits bei einem vorhergehenden Ablauf auf "wahr" gesetzt worden ist. Ist das nicht der Fall, so wird der Ablauf im Schritt S32 fortgesetzt.

Wird im Schritt S26 festgestellt, dass die Statusvariable des negativen Gradientengrenzwertes nicht den Zustand "wahr", sondern den Zustand "falsch" hat, so wird anschließend im Schritt S28 die Statusvariable für den negativen Gradientengrenzwert auf "wahr" gesetzt, und für den positiven Gradientengrenzewert auf "falsch". Nachfolgend wird der Ablauf im Schritt S30, wie bereits beschrieben, fortgesetzt und ein Zähler zum Erfassen der Gradientengrenzwertüberschreitungen um den Wert 1 inkrementiert. Ferner wird im Schritt S30 ein Timer für eine voreingestellte Zeitdauer gestartet. Im Schritt S32 wird überprüft, ob der im Schritt S30 gestartete Timer bereits abgelaufen ist. Ist das der Fall, so wird der Zähler zum Erfassen der Gradientengrenzwerte auf 0 und die Statusvariable des negativen Gradientengrenzwertes und die Statusvariable des positiven Gradientengrenzwertes jeweils auf "falsch" gesetzt. Anschließend ist der Ablauf im Schritt S36 beendet.

Wird im Schritt S32 jedoch festgestellt, dass der Timer nicht abgelaufen ist, so wird anschließend im Schritt S38 überprüft, ob der Zählwert des Zählers ≥ 2. Ist das der Fall, so wird im Schritt S40 ein Alarmsignal ausgegeben. Nach der Abarbeitung des Schritts S40 oder nachdem im Schritt S38 festgestellt wird, dass der Zählwert des Zählers nicht ≥ 2, wird im Schritt S42 überprüft, ob der Zählwert des Zählers einen Maximalwert von beispielsweise 10 überschritten hat. Ist das der Fall, so wird anschließend im Schritt S44 ein Signal zur Abschaltung des Verdichters 10, 112 ausgegeben. Nachfolgend ist der Ablauf im Schritt S36 beendet. Wird im Schritt S42 festgestellt, dass der aktuelle Zählwert des Zählers den Maximalwert nicht überschritten hat, ist der Ablauf im Schritt S36 beendet.

Der in Fig. 15 dargestellte Ablauf ist vorzugsweise ein Unterprogramm oder eine Funktion, das bzw. die von einem übergeordneten Programm wiederholt zur Abarbeitung aufgerufen wird. Das übergeordnete Programm ruft den in Fig. 15 dargestellten Ablauf in Zeitabständen auf, die kleiner als die voreingestellte Abtastzeit sind. Dadurch ist sichergestellt, dass die Abtastzeit zwischen zwei Messwerten exakt eingehalten wird, wodurch insbesondere das Ermitteln des Gradienten erheblich vereinfacht werden kann. Anderenfalls muss der Gradient abhängig von der tatsächlichen Abtastzeit bestimmt werden.

Obgleich in den Zeichnungen und in der vorhergehenden Beschreibung bevorzugte Ausführungsbeispiele aufgezeigt und detailliert beschrieben worden sind, sollte sie lediglich als rein beispielhaft und die Erfindung nicht einschränkend angesehen werden. Es wird darauf hingewiesen, dass nur die bevorzugten Ausführungsbeispiele dargestellt und beschrieben sind und sämtliche Veränderungen und Modifizierungen, die derzeit und künftig im Schutzumfang der Erfindung liegen, geschützt werden sollen.

## Patentansprüche

1. Verfahren zum Ermitteln eines Fehlerzustandes eines rotierenden Verdichters, insbesondere eines Turboverdichters,
bei dem mit Hilfe einer Messeinrichtung (114) ein Betriebsparameter des Verdichters (112) wiederholt erfasst und der Gradientenwert des Betriebsparameters wiederholt bestimmt wird,
das Unterschreiten eines negativen Gradientengrenzwertes und das Überschreiten eines positiven Gradientengrenzwertes überwacht wird, und bei dem
beim Unterschreiten des negativen Gradientengrenzwertes und anschließendem Überschreiten des positiven Gradientengrenzwertes innerhalb einer voreingestellten Zeit nach dem Unterschreiten des negativen Gradientengrenzwertes oder beim Überschreiten des positiven Gradientengrenzwertes und anschließendem Unterschreiten des negativen Gradientengrenzwertes innerhalb einer voreingestellten Zeit nach dem Überschreiten des positiven Gradientengrenzwertes ein Fehlerzustand festgestellt wird,
**dadurch gekennzeichnet, dass** überprüft wird, ob abwechselnd mehrere nacheinander ermittelte Gradientenwerte den positiven Gradientengrenzwert überschreiten und den negativen Gradientengrenzwert unterschreiten.

2. Verfahren nach Anspruch 1, **dadurch gekennzeichnet, dass** die Anzahl der nacheinander ermittelten den jeweiligen Gradientengrenzwert überschreitenden Gradientenwerte aufgrund der Zykluszeit zum wiederholten Ermitteln des Gradientenwerts und einer voreingestellten Zeitdauer festgelegt wird.

3. Verfahren nach einem der vorhergehenden Ansprüche, **dadurch gekennzeichnet, dass** als Betriebsparameter der eingangsseitige Druck (P1), der ausgangsseitige Druck (P3), der Motorstrom, die Motorleistung, der Differenzdruck zwischen eingangsseitigem Druck (P1) und ausgangsseitigem Druck (P3), die Fördermenge, ein vom Verdichter (10, 112) abgegebener Schall, die eingangsseitige Temperatur (T1) und/oder die ausgangsseitige Temperatur (T3) erfasst wird.

4. Verfahren nach Anspruch 3, **dadurch gekennzeichnet, dass** der Körperschallpegel des Verdichters (112) und/oder der Schalldruckpegel nahe dem Verdichter (112) erfasst wird, dass mit Hilfe eines Filters (128) ein weiterzuverarbeitender Frequenzbereich ausgewählt wird, und die Amplitudenwerte der im ausgewählten Bereich enthaltenen Frequenzen oder von voreingestellten Frequenzen, insbesondere mit Hilfe einer Frequenzanalyse, bestimmt wird.

5. Verfahren nach Anspruch 3, **dadurch gekennzeichnet, dass** der Verdichter (112) mehrere Verdichtungsstufen (12, 14) hat, wobei der eingangsseitige und/oder ausgangsseitige Druck mindestens einer dieser Stufen (12, 14) erfasst wird.

6. Verfahren nach einem der vorhergehenden Ansprüche, **dadurch gekennzeichnet, dass** ein Messwert des Betriebsparameters wiederholt in einem zeitlichen Abstand im Bereich zwischen 1 µs und 1 s, vorzugsweise im Bereich von 1 ms bis 100ms, erfasst wird, wobei der Gradient mit Hilfe von mindestens zwei aufeinander folgenden Messwerten bestimmt wird, vorzugsweise mit einer Anzahl aufeinander folgenden Messwerten im Bereich von 2 bis 500 Messwerten.

7. Verfahren nach einem der vorhergehenden Ansprüche, **dadurch gekennzeichnet, dass** der Verdichter (112) abgeschaltet und/oder entlastet wird, nachdem während einer voreingestellten Zeitdauer mehrere Fehlerzustände festgestellt werden.

8. Vorrichtung zum Ermitteln eines Fehlerzustandes eines rotierenden Verdichters, insbesondere eines Turboverdichters,
mit einer Messeinrichtung (114), die einen Betriebsparameter des Verdichters wiederholt erfasst,
mit einer Steuereinheit (116) die den Gradientenwert des Betriebsparameters wiederholt bestimmt,
wobei die Steuereinheit (116) das Unterschreiten eines negativen Gradientengrenzwertes und das Überschreiten eines positiven Gradientengrenzwertes überwacht, und
wobei die Steuereinheit (116) beim Unterschreiten des negativen Gradientengrenzwertes und anschließendem Überschreiten des positiven Gradientengrenzwertes innerhalb einer voreingestellten Zeit nach dem Unterschreiten des negativen Gradientengrenzwertes oder beim Überschreiten des positiven Gradientengrenzwertes und anschließendem Unterschreiten des negativen Gradientengrenzwertes innerhalb einer voreingestellten Zeit nach dem Überschreiten des positiven Gradientengrenzwertes einen Fehlerzustand feststellt,
**dadurch gekennzeichnet**, die Steuereinheit (116) überprüft, ob abwechselnd mehrere nacheinander ermittelte Gradientenwerte den positiven Gradientengrenzwert überschreiten und den negativen Gradientengrenzwert unterschreiten.

## Claims

1. A method for determining an error state of a rotating compressor, in particular a turbo compressor,
in which with the aid of a measuring device (114) an operating parameter of the compressor (112) is repeatedly sensed and the gradient value of the operating parameter is repeatedly determined,
it is monitored when a negative gradient limit value is fallen below and a positive gradient limit value is exceeded, and in which
when the negative gradient limit value is fallen below and the positive gradient limit value is subsequently exceeded within a preset period of time after the negative gradient limit value has been fallen below or when the positive gradient limit value is exceeded and the negative gradient limit value is subsequently fallen below within a preset period of time after the positive gradient limit value has been exceeded, an error state is determined,
**characterized in that** it is checked whether several successively determined gradient values alternately exceed the positive gradient limit value and fall below the negative gradient limit value.

2. The method according to claim 1, **characterized in that** the number of successively determined gradient values exceeding the respective gradient limit value is defined on the basis of the cycle time for the repeated determination of the gradient value and a preset period of time.

3. The method according to one of the preceding claims, **characterized in that** as an operating parameter the input-side pressure (P1), the output-side pressure (P3), the motor current, the motor performance, the pressure difference between input-side pressure (P1) and output-side pressure (P3), the delivery rate, a sound emitted by the compressor (10, 112), the input-side temperature (T1) and/or the output-side temperature (T3) is detected.

4. The method according to claim 3, **characterized in that** the structure-borne sound level of the compressor (112) and/or the sound pressure level near the compressor (112) is detected, **in that** with the aid of a filter (128) a frequency range to be processed further is selected, and the amplitude values of the frequencies contained in the selected range or of preset frequencies are determined in particular with the aid of a frequency analysis.

5. The method according to claim 3, **characterized in that** the compressor (112) has several compression stages (12, 14), the input-side and/or output-side pressure of at least one of these stages (12, 14) being sensed.

6. The method according to one of the preceding claims, **characterized in that** a measurement value of the operating parameter is repeatedly sensed at an interval in the range of 1 µs to 1 s, preferably in the range of 1 ms to 100 ms, the gradient being determined with the aid of at least two successive measurement values, preferably with a number of successive measurement values in the range of 2 to 500 measurement values.

7. The method according to one of the preceding claims, **characterized in that** the compressor (112) is switched off and/or unloaded, after several error states have been determined over a preset period of time.

8. A device for determining an error state of a rotating compressor, in particular a turbo compressor,
with a measuring device (114) that repeatedly detects an operating parameter of the compressor,
with a control unit (116) that repeatedly determines the gradient value of the operating parameter,
wherein the control unit (116) monitors when a negative gradient limit value is fallen below and a positive gradient limit value is exceeded, and
wherein the control unit (116) determines an error state when the negative gradient limit value is fallen below and the positive gradient limit value is subsequently exceeded within a preset period of time after the negative gradient limit value has been fallen below or when the positive gradient limit value is exceeded and the negative gradient limit value is subsequently fallen below within a preset period of time after the positive gradient limit value has been exceeded,
**characterized in that** the control unit (116) checks whether several successively determined gradient values alternately exceed the positive gradient limit value and fall below the negative gradient limit value.

## Revendications

1. Procédé de détermination d'un état de dérangement d'un compresseur rotatif, notamment d'un turbocompresseur, dans lequel
on mesure de façon répétitive, à l'aide d'un dispositif de mesure (114), un paramètre de fonctionnement du compresseur (112) et on détermine de façon répétitive la valeur de gradient du paramètre de fonctionnement,
on surveille le dépassement vers le bas d'une valeur limite de gradient négative et le dépassement vers le haut d'une valeur limite de gradient positive, et dans lequel
lors du dépassement vers le bas de la valeur limite de gradient négative suivi du dépassement vers le haut de la valeur limite de gradient positive un temps prescrit après le dépassement vers le bas de la valeur limite de gradient négative ou lors du dépassement vers le haut de la valeur limite de gradient positive suivi du dépassement vers le bas de la valeur limite de gradient négative un temps prescrit après le dépassement vers le haut de la valeur limite de gradient positive on définit un état de dérangement,
**caractérisé en ce que** l'on vérifie si plusieurs valeurs de gradient déterminées successivement dépassent alternativement vers le haut la valeur limite de gradient positive et vers le bas la valeur limite de gradient négative.

2. Procédé selon la revendication 1, **caractérisé en ce que** le nombre de valeurs de gradient déterminées successivement et dépassant vers le haut la valeur limite de gradient respective est défini en fonction du temps de cycle pour déterminer de façon répétitive la valeur de gradient et une durée prescrite.

3. Procédé selon l'une des revendications précédentes, **caractérisé en ce que** l'on mesure comme paramètre de fonctionnement la pression d'entrée (P1), la pression de sortie (P3), le courant du moteur, la puissance du moteur, la différence de pression entre la pression d'entrée (P1) et la pression de sortie (P3), le débit, un bruit généré par le compresseur (10, 112), la température d'entrée (T1) et/ou la température de sortie (T3).

4. Procédé selon la revendication 3, **caractérisé en ce que** l'on mesure le niveau sonore du corps du compresseur (112) et/ou le niveau de pression acoustique à proximité du compresseur (112), **en ce que** l'on choisit à l'aide d'un filtre (128) un domaine de fréquences à traiter ultérieurement, et on détermine les valeurs d'amplitude des fréquences contenues dans le domaine choisi ou de fréquences prescrites, notamment à l'aide d'une analyse fréquentielle.

5. Procédé selon la revendication 3, **caractérisé en ce que** le compresseur (112) possède plusieurs étages de compression (12, 14), la pression d'entrée et/ou la pression de sortie d'au moins un de ces étages (12, 14) étant mesurée.

6. Procédé selon l'une des revendications précédentes, **caractérisé en ce qu'**une valeur de mesure du paramètre de fonctionnement est mesurée de façon répétitive à une distance temporelle de l'ordre de 1 µs à 1 s, avantageusement de l'ordre de 1 ms à 100 ms, le gradient étant déterminé à l'aide d'au moins deux valeurs de mesure successives, avantageusement avec un grand nombre de valeurs de mesure successives de l'ordre de 2 à 500 valeurs de mesure.

7. Procédé selon l'une des revendications précédentes, **caractérisé en ce que** le compresseur (112) est arrêté et/ou équilibré après avoir défini plusieurs états de dérangement pendant une durée prescrite.

8. Dispositif de détermination d'un état de dérangement d'un compresseur rotatif, notamment d'un turbocompresseur, ledit dispositif comportant
un dispositif de mesure (114) qui mesure de façon répétitive un paramètre de fonctionnement du compresseur,
une unité de commande (116) qui détermine de façon répétitive la valeur de gradient du paramètre de fonctionnement,
l'unité de commande (116) surveillant le dépassement vers le bas d'une valeur limite de gradient négative et le dépassement vers le haut d'une valeur limite de gradient positive, et
l'unité de commande (116) déterminant un état de dérangement lors du dépassement vers le bas de la valeur limite de gradient négative suivi du dépassement vers le haut de la valeur limite de gradient positive un temps prescrit après le dépassement vers le bas de la valeur limite de gradient négative ou lors du dépassement vers le haut de la valeur limite de gradient positive suivi du dépassement vers le bas de la valeur limite de gradient négative un temps prescrit après le dépassement vers le haut de la valeur limite de gradient positive,
**caractérisé en ce que** l'unité de commande (116) vérifie si plusieurs valeurs de gradient déterminées successivement dépassent alternativement vers le haut la valeur limite de gradient positive et vers le bas la valeur limite de gradient négative.
